Europäisches Patentamt

European Patent Office

Office européen des brevets

(19)

(11) Veröffentlichungsnummer: **0 335 117**
**A2**

(12)

# EUROPÄISCHE PATENTANMELDUNG

(21) Anmeldenummer: 89103392.0

(22) Anmeldetag: 27.02.89

(51) Int. Cl.⁴: **G01C 9/14 , G01C 9/06**

(30) Priorität: 30.03.88 CH 1209/88

(43) Veröffentlichungstag der Anmeldung:
04.10.89 Patentblatt 89/40

(84) Benannte Vertragsstaaten:
**AT DE ES FR IT**

(71) Anmelder: **Gesellschaft zur Förderung der industrieorientierten Forschung an den Schweizerischen Hochschulen und weiteren Institutionen**
**Gloriastrasse 35**
**CH-8092 Zürich(CH)**

(72) Erfinder: **Köppel, Jakob**
**Lärchenweg 5**
**CH-8116 Würenlos(CH)**

(74) Vertreter: **Patentanwälte Schaad, Balass & Partner**
**Dufourstrasse 101 Postfach**
**CH-8034 Zürich(CH)**

(54) Vorrichtung zum Feststellen von Lageveränderungen bezüglich einer vertikalen Bezugsrichtung in Bauwerken oder im Baugrund.

(57) Ein an einem einerends fest verankerter Lotdraht (2) aufgehängtes Lotgewicht (3) trägt einen Laser-Lichtsender (10), dem ein ortsfester photoelektrischer Empfänger (11) gegenüberliegt. Letzterer weist eine Photodetektoranordnung (12) auf, der ein optisches System (14) sowie eine Mattscheibe (13) vorgeschaltet ist. Lichtsender (10) und Empfänger (11) bilden ein optisches Positionsmesssystem (9). Relativbewegungen zwischen der Verankerungsstelle (4) des Lotdrahtes (2) und damit dem Lotkörper (3) und dem Empfänger (11) quer zur Vertikalen haben eine Veränderung der Position des Auftreffpunktes des Lichtstrahles (10a) auf der Photodetektoranordnung (12) zur Folge. Durch Messung der jeweiligen Position dieses Lichtfleckes kann das Mass der Bewegung des Lotkörpers (3) und damit der Lotdrahtverankerungsstelle (4) relativ zum Empfänger (11) ermittelt werden.

Fig. 1

# VORRICHTUNG ZUM FESTSTELLEN VON LAGEVERAENDERUNGEN BEZÜGLICH EINER VERTIKALEN BE-ZUGSRICHTUNG IN BAUWERKEN ODER IM BAUGRUND

Die vorliegende Erfindung betrifft eine Vorrichtung zum Feststellen von Lageveränderungen bezüglich einer vertikalen Bezugsrichtung in Bauwerken oder im Baugrund gemäss Oberbegriff des Anspruches 1.

Bei bekannten Vorrichtungen dieser Art, die zum Messen der Neigung und der horizontalen Verschiebung von Bauwerken wie Talsperren und Häusern dienen, wird eine Verschiebung im Bauwerk bzw. des Bauwerkes relativ und quer zum Lotdraht mittels einer, einen am Lotdraht angreifenden Abtastfinger aufweisenden, Messeinrichtung mechanisch abgetastet. Die Auslenkung des Abtastfingers wird ebenfalls mechanisch auf einen Winkelwandler übertragen, der der Auslenkung des Abtastfingers entsprechende elektrische Signale erzeugt. Letztere werden zur Anzeige der Verschiebung bzw. zur Alarmierung weiterverarbeitet.

Diese bekannten Lotanlagen haben nun den Nachteil, dass mit einer Messeinrichtung nur Lageveränderungen in einer Richtung festgestellt werden können. Falls die Lageveränderungen in zwei Richtungen, d.h. in einer Ebene, gemessen werden sollen, so müssen zwei Messeinrichtungen vorgesehen werden. Die dauernde mechanische Berührung zwischen dem Abtastfinger und dem Lotdraht verursacht eine störende Auslenkung des letzteren und hat zudem Abnützungserscheinungen zur Folge, welche zu Fehlmessungen führen können. Um solche zu vermeiden, sind häufige Kontrollen und eine entsprechend aufwendige Wartung erforderlich.

Der vorliegenden Erfindung liegt nun die Aufgabe zugrunde, eine einen möglichst geringen Wartungsaufwand erfordernde Vorrichtung der eingangs genannten Art zu schaffen, die bei einfachem Aufbau jederzeit eine möglichst genaue und ungestörte Messung von Lageveränderungen im Bauwerk bzw. im Baugrund erlaubt.

Diese Aufgabe wird erfindungsgemäss durch die Merkmale des kennzeichnenden Teils gelöst.

Lageveränderungen des Empfängers relativ zur Bezugsrichtung bzw. zum Lotkörper haben eine Aenderung der Position des auf den Empfänger der optischen Positionsmessanordnung auftreffenden Laserstrahles zur Folge. Der Empfänger erzeugt nun für die jeweilige Position des Auftreffpunktes des Laserstrahles charakteristische elektrische Signale, die auch für das Mass der Lageveränderung kennzeichnend sind. Diese Signale werden nun zur Anzeige oder Alarmierung verwendet, und zwar sowohl am Einbauort der Vorrichtung wie auch an einer von diesem entfernten Stelle. Durch entsprechende Ausbildung des Empfängers können dabei mit derselben Positionsmessanordnung Lageveränderungen in zwei zueinander rechtwinklig stehenden Richtungen, d.h. in einer Ebene, ermittelt werden. Das Erfassen der Lageveränderungen erfolgt berührungslos und somit abnutzungsfrei, was ein von Störgrössen weitgehend unbeeinflusstes, genaues Messen möglich macht. Zu einer solchen genauen Messung trägt auch der Umstand bei, dass der auf den Empfänger auftreffende Laserstrahl scharf gebündelt ist. Zudem ist eine dauernde Wartung nicht erforderlich.

Bei einer bevorzugten Ausführungsform ist der Laser-Lichtsender am Lotkörper angeordnet, während der Empfänger ortsfest plaziert ist. Bei einer solchen Ausführungsform kann die Stromversorgung der Lichtquelle besonders einfach drahtlos bzw. berührungsfrei erfolgen, vorzugsweise auf die im Anspruch 9 oder im Anspruch 10 definierte Art.

Andere bevorzugte Weiterausgestaltungen der erfindungsgemässen Vorrichtung bilden Gegenstand der übrigen abhängigen Ansprüche.

Es sind Inklinometer zur Bestimmung der Neigung von Objekten bekannt, die eine berührungslos arbeitende Positionsmesseinrichtung aufweisen (Patent Abstracts of Japan, Band 10, Nr. 102 (P-448)(2159) 18. April 1986 sowie US-PS 4,627,172). Diese bekannten Geräte weisen ein Gehäuse auf, das am zu überwachenden Objekt befestigt wird. Im Gehäuse ist eine Lichtquelle (Luminiszenzdiode) und dieser gegenüberliegend ein photoelektrischer Empfänger angeordnet. Das von der Lichtquelle ausgesandte Licht wird über einen Lichtleiter zum Empfänger übertragen. Der Lichtleiter bildet Teil eines am einen Ende im Gehäuse gelagerten Pendels.

Diese bekannten Inklinometer unterscheiden sich in der Konstruktion vom Erfindungsgegenstand und eignen sich weniger zum Feststellen von Lageveränderungen in grossen Bauwerken wie Talsperren und dergleichen.

Im folgenden werden nun anhand der Zeichnung Ausführungsbeispiele des Erfindungsgegenstandes näher erläutert. Es zeigen rein schematisch:

Fig. 1 eine als Gewichtslotanlage ausgebildete Vorrichtung zum Messen von Relativverschiebungen quer zur Vertikalen,

Fig. 2 eine als Schwimmlotanlage ausgebildete Vorrichtung zum Messen von Relativverschiebungen quer zur Vertikalen,

Fig. 3 ein elektrisches Blockschaltbild der in den Lotanlagen gemäss den Fig. 1 und 2 verwendeten optischen Positionsmessanordnung, und

Fig. 4 und 5 eine mittels Lotanlagen gemäss den Fig. 1 bis 3 überwachte Staumauer in Vorderansicht bzw. von der Seite.

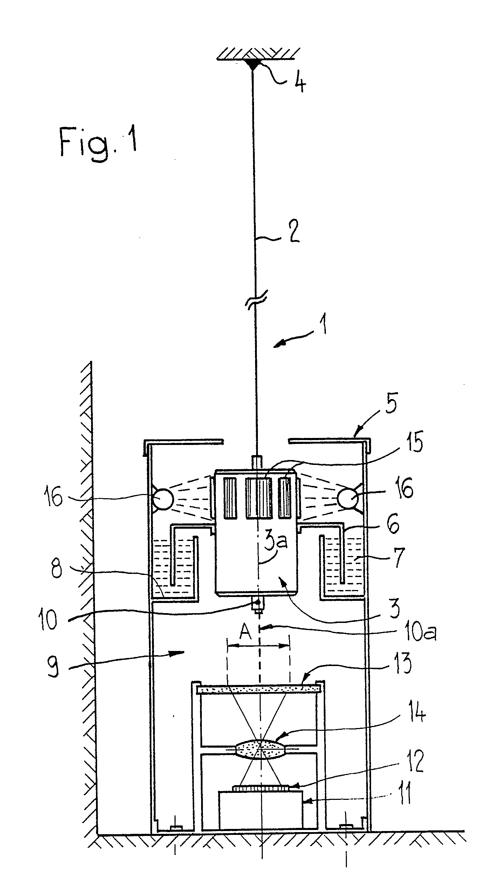

Die in der Fig. 1 gezeigte Gewichtslotanlage besteht aus einem Lotdraht 2 und einem an dessen unterem Ende befestigten, als Lotgewicht ausgebildeten Lotkörper 3. Der Lotdraht 2 ist an seinem oberen Ende an einer ortsfesten Verankerungsstelle 4 festgehalten. Der Lotkörper 3 ist in einem Gehäuse 5 untergebracht und trägt an seinem Umfang ein Dämpfungselement 6, das in eine Dämpfungsflüssigkeit 7 eintaucht, die sich in einem an der Innenseite des Gehäuses 5 vorgesehenen Behälter 8 befindet.

Zum Messen von Relativverschiebungen quer zur Vertikalen ist eine optische Positionsmessanordnung 9 vorgesehen. Diese besteht aus einem Lichtsender 10 und einem Empfänger 11. Der Lichtsender 10 ist ein Laser und ist an der Unterseite des Lotkörpers 3 angebracht. Der Lichtsender 10 ist mit der Längsachse 3a des Lotkörpers 3 ausgerichtet, welche in Ruhelage in vertikaler Richtung verläuft. Der vom Lotgewicht 3 getrennt befestigte Empfänger 11 weist eine Photodetektoranordnung 12 auf, die aus einem oder mehreren lichtempfindlichen Elementen wie Photodioden oder Photoelementen gebildet wird. Im Strahlengang zwischen dem Lichtsender 10 und dem Empfänger 11 ist eine Mattscheibe 13 (oder ein andersartig ausgebildeter Diffusor) sowie ein optisches System 14 angeordnet. Der vom Laser 10 ausgesandte Laserstrahl 10a erscheint auf der Mattscheibe 13 als Lichtfleck, der über das optische System 14 auf die Photodetektoranordnung 12 abgebildet wird. Das optische System 14 dient dazu, den durch den Laserstrahl 10a bestrichenen Messbereich A auf der Mattscheibe 13 verkleinert auf die Photodetektoranordnung 12 abzubilden, was es erlaubt, die Photodetektoranordnung 12 klein zu halten, und trotzdem beträchtliche Relativverschiebungen erfassen zu können.

Die Stromversorgung der Lichtquelle 10 erfolgt beim gezeigten Ausführungsbeispiel drahtlos und berührungsfrei. Die Stromversorgungsanordnung weist am Umfang des Lotkörpers 3 angeordnete Photoelemente 15 (Solarzellen) auf, denen ortsfeste Lichtquellen 16 gegenüberliegen, welche an der Innenseite des Behälters 5 angebracht sind. Die Photoelemente 15 wandeln das empfangene Licht auf bekannte Weise in einen elektrischen Strom um. Diese Stromversorgungsanordnung hat den Vorteil, dass sie das Verhalten des Lotkörpers 3 bei Relativverschiebungen in keiner Weise beeinflusst.

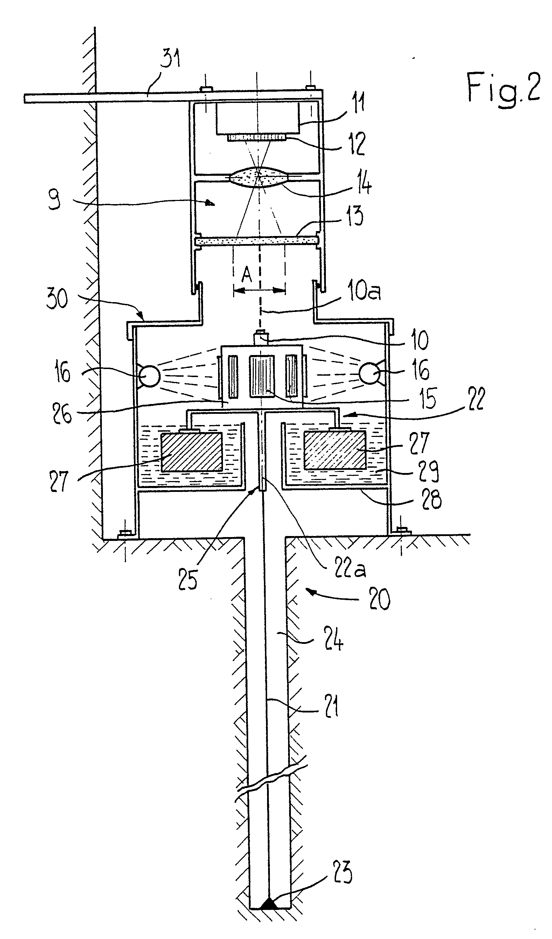

In der Fig. 2 ist eine Schwimmlotanlage 20 gezeigt, die sich in erster Linie durch die andere Ausbildung und die andere Anordnung des Lotkörpers von der Gewichtslotanlage gemäss Fig. 1 unterscheidet. Die Schwimmlotanlage 20 besteht ebenfalls aus einem Lotdraht 21 und einem als Schwimmer 22 ausgebildeten Lotkörper, der am obern Ende des Lotdrahtes 21 an diesem befestigt ist. Der Lotdraht 21 ist an seinem unteren Ende an einer ortsfesten Verankerungsstelle 23 befestigt, welche in einem Bohrloch 24 angeordnet ist. Der Lotkörper 22, dessen sich in vertikaler Richtung erstreckende Längsachse mit 22a bezeichnet ist, weist eine Tragkonstruktion 25 auf, auf der sich ein Tragkörper 26 abstützt. An der Tragkonstruktion 25 sind Schwimmer 27 befestigt, die in eine in einem Schwimmergefäss 28 untergebrachte Flüssigkeit 29 eintaucht. Der Lotkörper 22 ist von einem Gehäuse 30 umgeben.

Relativverschiebungen quer zur Vertikalen werden gleich wie bei der Lotanlage gemäss Fig. 1 durch eine optische Positionsmessanordnung 9 festgestellt, welche gleich aufgebaut ist wie die in Fig. 1 gezeigte Positionsmessanordnung. Daher sind entsprechende Bauteile der beiden Positionsmessanordnungen 9 in den Fig. 1 und 2 mit denselben Bezugszeichen versehen.

Die Stromversorgung des Lasers 10 erfolgt auch bei der Ausführungsform gemäss Fig. 2 mittels Photoelementen 15 (Solarzellen), welche am Umfang des Tragkörpers 26 angeordnet sind und die von auf der Innenseite des Gehäuses 30 angeordneten Lichtquellen 16 angestrahlt werden.

Die vom Schwimmer 22 getrennten Bauteile der Positionsmessanordnung 9, nämlich der Empfänger 11, die Mattscheibe 13 und das optische System 14, sind an einer Halterung 31 befestigt.

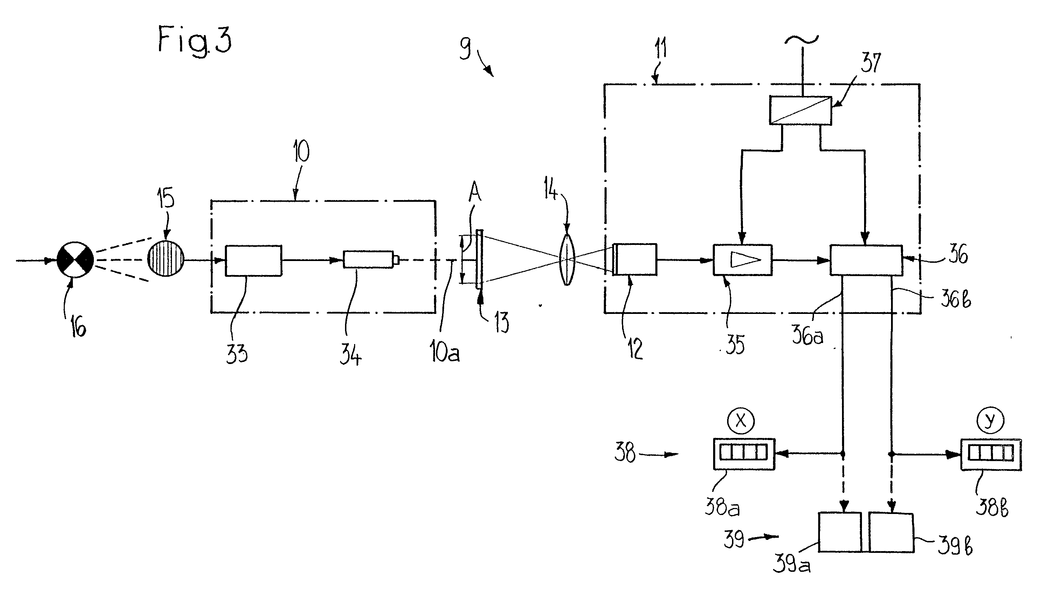

In Fig. 3 ist ein Blockschema der optischen Positionsmessanordnung 9 gezeigt, wie sie in den Lotanlagen gemäss den Fig. 1 und 2 verwendet wird. In dieser Fig. 3 sind für sich entsprechende Bauteile dieselben Bezugszeichen wie in den Fig. 1 und 2 verwendet.

Wie aus Fig. 3 hervorgeht, besteht der Laser 10 aus einem Laserdriver 33, der von den Photoelementen 15 mit Strom versorgt wird. Der Laserdriver 33 ist mit dem eigentlichen Laserstrahlerzeuger 34 verbunden, der den Laserstrahl 10a aussendet, der wie bereits erwähnt auf der Mattscheibe 13 als Lichtfleck erscheint, der über das optische System 14 auf die Photodetektoranordnung 12 des Empfängers 11 abgebildet wird. Dieser Empfänger 11 weist ferner einen Vorverstärker 35 sowie einen Endverstärker 36 auf, die beide von einem Speiseteil 37 mit elektrischer Energie versorgt werden. Der Speiseteil 37 ist an eine Stromquelle, z.B. an das Netz, angeschlossen. Die in der Photodetektoranordnung 12 als Folge des auftreffenden Lichtstrahles erzeugten elektrischen Signale werden über den Vorverstärker 35 dem Endverstärker 36 zugeführt, der an seinen Ausgängen 36a und 36b Signale erzeugt, die einer örtlichen Anzeigeeinrichtung 38 zugeführt werden, welche eine Anzeige 38a für eine Positionsanzeige in X-Richtung und eine Anzeige 38b für eine Positionsanzeige in Y-Richtung aufweist. Diese elektrischen Signale lassen sich auch fernübertragen, wie das in Fig. 3 angedeutet ist. Die mit 39 bezeichnete Fernanzeigeanordnung kann ebenfalls eine Anzeige 39a für die Positionsanzeige in X-Richtung und eine Anzeige 39b für eine Positionsanzeige in Y-Richtung aufweisen. Es versteht sich, dass es auch möglich ist, zusätzlich zu oder anstelle der optischen Anzeigeanordnungen 38 und 39 eine registrierende Anzeige und/oder eine Alarmanlage vorzusehen.

Im folgenden wird nun anhand der Fig. 1 bis 3 die Wirkungsweise der Lotanlagen 1 und 20 beschrieben, welche für beide Ausführungsformen gemäss den Fig. 1 und 2 im wesentlichen dieselbe ist.

Die Längsachse 3a, 22a des Lotkörpers 3, 22 und auch der Lotdraht 2, 21 verlaufen in vertikaler Richtung (Bezugsrichtung). Erfolgt nun eine Relativverschiebung zwischen der Verankerungsstelle 4, 23 des Lotdrahtes 2, 21 und dem Empfänger 11 in einer Richtung quer zur Vertikalen, so verändert sich die Lage des Lotkörpers 3, 22 relativ zum Empfänger 11. Diese Lageveränderung hat nun ein Auswandern des auf die Photodetektoranordnung 12 des Empfängers 11 auftreffenden Lichtfleckes aus seiner Nullage zur Folge. Die entsprechende Lageänderung des Lichtfleckes wird nun auf an sich bekannte Weise im Empfänger 11 in elektrische Signale umgewandelt, welche für die jeweilige Position des Lichtfleckes auf der Photodetektoranordnung 12 in X-Richtung und in Y-Richtung und somit auch für das Mass der Relativverschiebung zwischen Lotkörper 3, 22 und Empfänger 11 kennzeichnend sind. Die entsprechenden Istwertsignale erscheinen am Ausgang 36a bzw. 36b des Endverstärkers 36 und werden wie bereits erwähnt zur Positionsanzeige bzw. zur Alarmierung herangezogen.

Eine Relativbewegung des Lotkörpers 3, 22 bezüglich des Empfängers 11 wird somit dadurch gemessen, dass die Position des diese Relativbewegung mitmachenden Lichtfleckes auf der Photodetektoranordnung 12 festgestellt wird. Das Mass dieser Relativbewegung wird somit berührungsfrei gemessen, so dass diese Messung die Relativbewegung nicht verfälschend beeinflussen kann. Mit einer einzigen Positionsmessanordnung 9 kann wie erwähnt die Relativverschiebung in verschiedenen Richtungen ermittelt werden. Wird jedoch die Messung der Relativbewegung nur in einer Richtung verlangt, so ist dies durch Einsatz eines anderen Empfängers problemlos möglich.

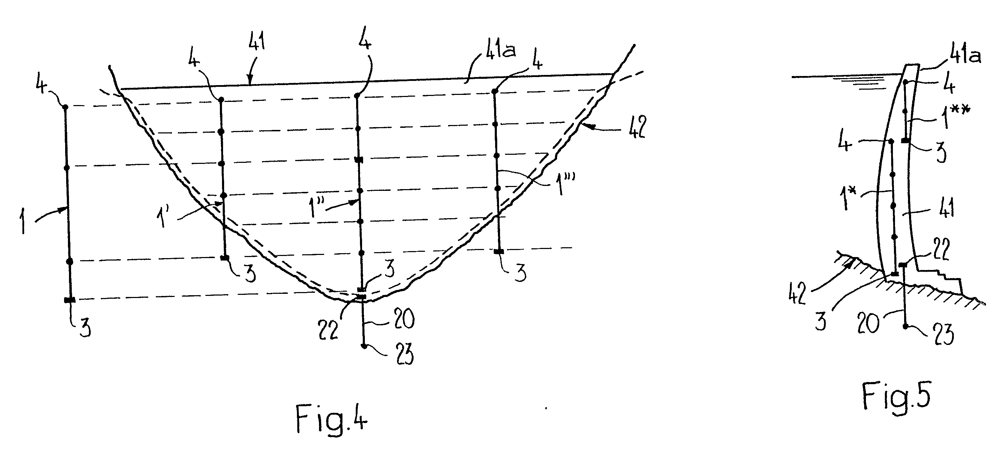

Die beschriebenen Lotanlagen 1, 20 eigenen sich insbesondere für die Ueberwachung von Talsperren. In den Figuren 4 und 5 ist rein schematisch eine Staumauer 41 mit eingebauten Lotanlagen 1, 20 gezeigt. Aus diesen Fig. 4 und 5 sind nun verschiedene Einbaumöglichkeiten solcher Lotanlagen ersichtlich. So ist beispielsweise die Gewichtslotanlage 1 vollständig im Baugrund 42 untergebracht, während die Gewichtslotanlagen 1" und 1''' sowie 1" vollständig im Innern der Staumauer 41 untergebracht sind. Demgegenüber befinden sich die Verankerungsstellen 4 der Gewichtslotanlagen 1' und 1''' in der Staumauerkrone 41a, während die Lotkörper 3 dieser Lotanlagen 1' und 1''' in den Baugrund 42 hinabreichen. Bei den Schwimmlotanlagen 20 befindet sich die Verankerungsstelle 23 im Baugrund 42, während der Schwimmer 22 am Fuss der Staumauer 41 angeordnet ist.

Ausser zur Ueberwachung von Talsperren können die be schriebenen Lotanlagen 1, 20 auch zum Messen von Verschiebungen gegenüber der Vertikalen in andern Bauwerken, z.B. Häusern, wie auch im Baugrund eingesetzt werden.

Es versteht sich, dass die gezeigten Ausführungsbeispiele in verschiedenen Teilen auch anders als wie gezeigt ausgebildet werden können. Im folgenden wird nun auf einige der möglichen Varianten kurz eingegangen.

So ist es möglich, den Lichtsender 10 und den Empfänger zu vertauschen, d.h. letzteren am Lotkörper 3, 22 zu befestigen und den Lichtsender 10 ortsfest anzuordnen. Im weiteren ist es denkbar, sowohl den Lichtsender 10 wie auch den Empfänger 11 ortsfest anzuordnen und am Lotkörper 3, 22 ein optisches Umlenksystem zu befestigen, welches den vom ortsfesten Lichtsender 10 ausgesandten Lichtstrahl auf den Empfänger 11 umlenkt. Dabei muss jedoch Sorge dafür getragen werden, dass dieses optische Umlenksystem derart ausgebildet bzw. angeordnet ist, dass eine Drehung des Lotkörpers 3, 22 um seine Längsachse 3a, 22a keinen Einfluss auf die Positionsmessung hat. Diese Schwierigkeit kann bei den gezeigten Ausführungsformen mit am Lotkörper 3, 22 befestigtem Lichtsender 10 leicht dadurch umgangen werden, dass der Lichtsender 10 mit der Längsachse 3a, 22a des Lotkörpers 3, 22 fluchtend an diesem befestigt wird.

Die Versorgung des am Lotkörper 3, 22 befestigten Lichtsenders 10 bzw. Empfängers 11 kann beispielsweise auch über ein Hochfrequenz-Energieübertragunssystem erfolgen, welches einen am Lotkörper 3, 22 angeordneten Empfängerteil und einen ortsfesten Senderteil aufweist, der hochfrequente elektromagnetische Schwingungen erzeugt, die vom Empfängerteil in elektrische Energie umgewandelt werden. Auch ein solches Energieübertragungssystem benötigt keine Kabelverbindung zum Lotkörper 3, 22. Daneben ist es auch möglich, die elektrische Energie über ein Kabel dem Lichtsender 10 bzw. dem Empfänger 11 zuzuführen. Dieses Kabel müsste dabei im Lotdraht 2, 21 verlaufen oder Teil desselben bilden. Bei einer solchen Ausführungsform ist jedoch dafür Sorge zu tragen, dass die Speiseleitung das Verhalten des Lotkörpers 3, 22 bei einer Relativbewegung nicht nachteilig beeinflusst.

## Ansprüche

1. Vorrichtung zum Feststellen von Lageveränderungen bezüglich einer vertikalen Bezugsrichtung in Bauwerken oder im Baugrund mit einer diese Bezugsrichtung festlegenden Lotanordnung (1, 20), welche aus einem am einen Ende verankerten Lotdraht (2, 21) und einem am andern Ende des Lotdrahtes (2, 21) mit diesem verbundenen Lotkörper (3, 22) besteht und mit einer Messeinrichtung (9) zum Ermitteln von Lageveränderungen im Bauwerk oder im Baugrund relativ zum Lotkörper (3, 22), die für diese Lageveränderungen charakteristische elektrische Signale erzeugt, dadurch gekennzeichnet, dass die Messeinrichtung eine optische Positionsmessanordnung (9) ist, die durch einen Laser-Lichtsender (10) und einen das von diesem ausgestrahlte Licht empfangenden, photoelektrischen Empfänger (11) gebildet ist, der aufgrund der jeweiligen Position des einfallenden Lichtstrahles (10a), die der Abweichung relativ zur Bezugsrichtung entspricht, Istwertsignale erzeugt.

2. Vorrichtung nach Anspruch 1, dadurch gekennzeichnet, dass der Empfänger (11) eine Photodetektoranordnung (12) aufweist, die vorzugsweise durch wenigstens ein Photoelement oder wenigstens eine Photodiode gebildet ist.

3. Vorrichtung nach Anspruch 1, dadurch gekennzeichnet, dass zumindest entweder der Lichtsender (10) oder der Empfänger (11) ortsfest angeordnet ist.

4. Vorrichtung nach Anspruch 3, dadurch gekennzeichnet, dass der Lichtsender (10) am Lotkörper (3, 22) angeordnet und vorzugsweise mit dessen Längsachse (3a, 22a) ausgerichtet ist.

5. Vorrichtung nach Anspruch 3, dadurch gekennzeichnet, dass der Empfänger (11) am Lotkörper (3, 22) angeordnet und vorzugsweise mit dessen Längsachse (3a, 22a) ausgerichtet ist.

6. Vorrichtung nach Anspruch 3, dadurch gekennzeichnet, dass sowohl der Lichtsender wie auch der Empfänger ortsfest sind und der Lotkörper (3, 22) eine im Strahlengang zwischen Lichtsender und Empfänger angeordnete optische Umlenkanordnung trägt.

7. Vorrichtung nach Anspruch 1, dadurch gekennzeichnet, dass dem Empfänger (11) ein den vom Lichtstrahl (10a) bestrichenen Bereich (A) verkleinert abbildendes optisches System (14) vorgeschaltet ist.

8. Vorrichtung nach Anspruch 7, dadurch gekennzeichnet, dass dem optischen System (14) ein Diffusor, vorzugsweise eine Mattscheibe (13) vorgeschaltet ist.

9. Vorrichtung nach Anspruch 4 oder 5, dadurch gekennzeichnet, dass zur Stromversorgung des Lichtsenders (10) bzw. des Empfängers (11) am Lotkörper (3, 22) mindestens ein Photoelement (15) angeordnet ist, das von wenigstens einer ortsfesten Lichtquelle (16) angestrahlt ist.

10. Vorrichtung nach Anspruch 4 oder 5, dadurch gekenn zeichnet, dass zur Stromversorgung des Lichtsenders (10) bzw. des Empfängers (11) eine Hochfrequenz-Energieübertragungsanordnung bestehend aus einem ortsfesten Hochfrequenzsender und einem am Lotkörper (3, 22) angeordneten Empfänger vorgesehen ist.

11. Vorrichtung nach Anspruch 4 oder 5, dadurch gekennzeichnet, dass der Lichtsender (10) bzw. der Empfänger (11) über eine im Lotdraht (2, 21) verlaufende oder Teil desselben bildende Speiseleitung mit einer ortsfesten Spannungsquelle verbunden ist.

12. Vorrichtung nach Anspruch 1, dadurch gekennzeichnet, dass der Lotkörper ein am Lotdraht (2) hängendes Lotgewicht (3) ist.

13. Vorrichtung der Anspruch 1, dadurch gekennzeichnet, dass der Lotkörper als Schwimmer (22) ausgebildet und am obern Ende des Lotdrahtes (21) mit diesem verbunden ist.

14. Verwendung der Vorrichtung nach Anspruch 1 zur Ueberwachung von Talsperren (41).

Fig. 1

Fig.2

Fig.3

EP 0 335 117 A2

Fig.5

Fig.4